# EUROPEAN PATENT APPLICATION

(11) **EP 4 129 840 A1**
(43) Date of publication of application: **08.02.2023**
(21) Application number: 21724395.5
(22) Date of filing: 01.04.2021
(51) Int. Cl.: B65D 1/02, B65D 1/26, B65D 65/46, B65D 85/804

(54) **CONTAINERS MADE OF COMPOSITE MATERIALS WITH AFFINITY BETWEEN SUBSTANCES**

(30) Priority: 01.04.2020 PT 2020116219
(71) Applicant: Novadelta - Comércio e Indústria de Cafés, Lda, 1950-041 Lisboa (PT)
(72) Inventor: NABEIRO, Rui Miguel, 7370-112 Campo Maior (PT); FIGUEIRA BARROS DOS REIS, Claudia, 1495-130 Lisboa (PT); RODRIGUES, Carla, 2580-551 Alenquer (PT)
(74) Representative: Ferreira Pinto, Francisca
(86) International application number: PCT/PT2021/050010
(87) International publication number: WO 2021/201709

(57) **Abstract**

The present invention discloses collection confinements adapted for collection and preservation of edible substances during a minimal period of time required for conservation thereof, in particular aromatic edible substances, such as for example substances derived or associated with coffee or containing caffeine, whereby said confinements are produced in composite materials that provide barrier to the transfer of liquids and gases and present compositions that include synthetic polymers and/or bio-polymers, as well as further vegetal fibre associated with at least one sub-product from processing of the edible vegetal having affinity with the one being collected in said confinement, such as for example fibre of coffee silverscreen resulting from roasting of coffee beans, thereby providing a new economic utilization of such sub-products, and confinements presenting high bio-degradation degree once disposed thereof.

## Description

### Field of the invention

The present invention refers to the field of confinements of the type preserving packages for edible substances associated with coffee or containing caffeine, and produced with biodegradable composite substances presenting a composition that includes a substance of a sub-product from processing of coffee beans.

### Background of the invention

Considering the environmental cost associated with most of the plastic materials, there is today a growing need of providing new materials for packages and other types of uses, that can replace said plastic materials.

The distribution of edible substances, in particular of edible substances with sensitive organoleptic properties, such as for example roasted and ground coffee beans, requires using confinement in materials providing an interior atmosphere that is controlled and sealed relative to the exterior environment. In particular, such confinements are provided in materials that must at least provide barrier to the transfer of water vapour and oxygen during previously defined periods of time, usually designated as shelve-life, and that can be of several months. Presently, because of the need to fulfil such requirements, the materials most often used for this purpose are synthetic materials, including both plastics and metals that present relatively high economic and environmental costs.

Coffee is a popular beverage around the world, being prepared in several ways according to local tradition and costumes. One of those ways is the so-called espresso coffee, whose consumption habits have been very significantly increased and globalized in the previous years. One of the motives that certainly sustains such popularity is the possibility of preparing espresso coffee in a practical and economic manner, in simple and relatively inexpensive machines, of the appliance category, notably in coffee machines that operate with single portion disposable capsules. Despite the fact that some alternatives to such coffee capsules that are less harmful to the environment are starting to arrive to the market, the impact of coffee capsules is a serious environmental problem, that is worsened by the big market growth of this type of packages.

The coffee silverscreen is a sub-product of the roasting process of green coffee beans, generally corresponding to the part that separates from the coffee beans after roasting thereof. The coffee silverscreen is generated in significant quantities and is currently considered as a non-valorised sub-product, frequently disposed of without considering its potential for other applications.

The prior art includes several documents relating to composite substances presenting a composition that includes synthetic polymers, notably in a thermoplastic matrix, and bio-polymers.

The document EP 2218653 A1 discloses a biologically decomposable package that includes a shell, a layer of fibre and a closing membrane that are in each case constituted by a biologically decomposable material.

The document WO 03/000810 A1 discloses and enhanced composition of impregnation and coating based upon emulsions of polymers and latex of vegetal origin such as shell and other ashes, including ashes of coffee shell in the proportion of 10 to 500 of the weight of composite.

The document WO 2012/077066 A1 discloses a capsule for preparing a liquid product comprising a base wall that presents a structure in layers with at least one layer made from a first compostable material and at least one layer made from a second compostable material that does not suffer noticeable softening and/or melting at a temperature of 70°C - 120 °C. In particular, said first compostable material is selected from the group that includes polymers derived from biomasses, synthetic polymers, polymers produced by microorganisms or genetically modified bacteria, polymers from fossil monomers, and mixtures of said polymers with or without additives. Said second compostable material is selected from paper, such as cellulose paper, preferentially 100% of cellulose paper, cardboard, paper cellophane and cellulose acetate in particular, the layer of said first material is disposed internally with relation to the layer of said second material. The disclosed capsule can be integrally constituted by compostable material. This document describes definitions of "compostable" and of "bio-degradation", which are herewith also adopted in the scope of the present disclosure.

The document US 2012/0097602 A1 discloses a capsule of similar type, whereby the filter component presents a mixture of 0 to 600 of cellulose fibres and of about 40 to 100 of fibres of compostable polyester.

The document WO 2015/162632 A1 discloses a capsule of similar type that comprises a biodegradable and compostable polymer material, or a mixture of said materials, and a percentage of filling agents, whereby the polymer materials include agro-polymers and bio-polyesters.

The document WO 2015/162632 A1 discloses a compound with a thermoplastic polymer and a filling medium for producing food packages, in particular coffee capsules, and that also includes polysaccharides derived from agro-polymers. Said capsule presents a single layer that is made from a material comprising a biodegradable and compostable polymer, with a percentage of filling media between 15% and 80% of at least one aliphatic polyester aliphatic-aromatic containing from 15% to 90% of one or more filling media with a granulometry D50.

The document FR 3035085 also discloses a capsule produced from a compound including agro-polymers from a particular list of possible origins of such agro-polymers.

None of the documents in the prior art discloses a composite substance presenting a composition that includes bio-polymers adapted to a thermoplastic matrix, including natural fibres derived from sub-products of edible vegetal species, in particular aromatic, such as for example coffee silverscreen, and that provides good dimensional and functional properties in view of different types of uses.

### General description of the invention

The objective of the present invention is to provide confinements of edible substances associated with coffee or containing caffeine, with preserving properties thereof and produced in composite substances that present a composition including fibres of natural materials otherwise not used up until the present, instead of plastic materials, thereby replacing at least part of the mass of said composite substance with a presently unvalued source of bio-degradable material, and adapted so that provides physical properties, including mechanical and optical, of transfer barrier to fluids (permeability) and surface (wettability, friction coefficient), of barrier to the transmission of ultraviolet radiation and others, advantageous in view of collection and conservation of perishable substances during relatively long periods of time, of at least several months.

This objective is solved according to the present invention by means of a collection confinement according to claim 1, whereby preferred embodiments are disclosed in the dependent claims.

In particular, the collection confinements according to the present invention present envelopes at least with barrier properties to fluids for collection of a previously defined quantity of an edible substance associated with coffee or including caffeine, for example products resulting from the processing of green coffee beans, such as roast and ground coffee beans, with a specific weight smaller than 1.100 kg/m³, and a total weight smaller than 5 kg, preferentially smaller than 1 kg, whereby said collection confinements are produced in composite substances with at least some physical-chemical properties similar to those of coffee, presenting a composition that includes natural fibres of sub-products associated with processing of coffee beans, and adapted so that present physical properties, including of barrier to fluids and optical barrier properties, similar to those of synthetic polymers and/or bio-polymers.

In particular, the collection confinements according to the present invention are produced in composite substances that include fibre of coffee silverscreen in their composition, and eventually further sub-products of processing of other aromatic vegetal species, such as for example sub-products of green coffee beans, locust bean, rice and cinnamon.

The collection confinements can be produced in composite substances that do not include plastic substances of fossil origin, whereby it is preferred when said composite substance does not include PLA.

The collection confinements according to the present invention can be produced in composite substances that present a thermoplastic matrix that includes at least one of: synthetic polymers and bio-polymers, and is reinforced with natural fibres of coffee silverscreen, thereby the mass fraction of the synthetic polymers and/or bio-polymers.

It has been demonstrated as advantageous when the collection confinements are produced in composite substances presenting a composition that includes natural fibres of sub-products associated with the processing of aromatic vegetal species, given that these provide a better contribution to maintaining the organoleptic profiles associated with the perishable substances to be collected in objects produced with said composite substances.

The collection confinement can be adapted so that can collect a previously defined volume of a solid medium, including non-granulated, granulated, such as for example roasted and ground coffee, in powder, such as for example soluble coffee powder, of a pastry medium or of a liquid medium, such as for example coffee concentrate.

The collection confinement can be adapted so that can be functionally operated in a device for preparing an edible product, including a beverage with a caffeine content, such as an aromatic beverage, a soft drink or similar.

The collection confinement can present a part that can configure an opening adapted so that can be closed and open by means of a removable element.

The collection confinement can present a first and a second part, for example a container part and a lid part, adapted so that can be retained to each other and thereby confine an interior collection space, whereby at least one of, preferentially both of said first and second parts present completely bio-degradable compositions, whereby the first and second parts can be provided in composite substances with similar or different fractions of natural fibre of coffee silverscreen, or other sub-product of processing of an aromatic vegetal species, such as for example rice, cinnamon and locust bean.

Another inherent objective is to provide a package of food products, in particular packages of coffee, such as for example capsule and pod for roasted and ground coffee beans, with certain physical-chemical properties similar to those of coffee.

The composite substances according to the present invention can be used for producing articles of the type flexible films, semi-flexible packages, such as for example pods for containing aromatic edible substances, such as for example cinnamon sticks, and rigid packages, such as for example capsules for roasted and ground coffee beans, and other aromatic edible substances, and open recipients, such as for example cups, glasses, as well as other articles, such as for example utensils used in confectioning food, such as for example spoons and similar.

An inherent objective of the present invention is to provide a use of a material associated with processing of coffee beans, in particular of coffee silverscreen, with economic utilization thereof and minimizing the sub-products usually resulting from processing of green coffee beans and eliminated, not being used of valued economically.

This objective is attained according to the present invention by means of a use according to claim 13.

In particular, the aforementioned objective can be solved by means of the use of a collection confinement according to any of claims 1 to 12.

The coffee silverscreen is a sub-product of processing of coffee, in particular resulting from roasting of green coffee beans.

An inherent objective is to provide the use of composite substances for production of objects for collecting perishable substances, such as edible substances, in general, and substances with degradable organoleptic profiles as a result of exposure to ambient water vapour and oxygen, such as roasted and ground coffee, tea and other aromatic substances, and presenting a composition in the family of the bio-polymers.

In the scope of the present invention, "sub-product of edible vegetal specie" is to be understood as any material or substance that results from a processing, for example mechanical, thermal or other, of a vegetal species, whereby said "sub-product", material or substance, that is not directly used or usable as a food product. The definition of "sub-product" can be further understood by reference to a process that generates a "product of edible vegetal species", in the meaning of an edible substance that directly results as greater mass fraction from a processing of an edible vegetal specie from which also results at least one "sub-product", with smaller mass fraction. In this sense, "sub-product" is a smaller mass fraction that results from a process of manipulation or transformation of an edible vegetal species, as raw material, in an edible product that is ready to be used or consumed.

### Description of the Figures

The invention shall be hereinafter explained in greater detail based upon preferred embodiments and the attached Figures.

The Figures show:
- Figure 1:: graphic of viscosity of a first embodiment of a composite substance used in a collection confinement (1) according to the present invention;
- Figure 2:: graphic of viscosity of a second embodiment of a composite substance used in a collection confinement (1) according to the present invention;
- Figure 3:: graphic of thermal behaviour of coffee silverscreen, obtained after roasting of coffee beans;
- Figure 4:: graphic comparing the first and second embodiments according to the present invention;
- Figure 5:: graphic of spectrometry comparing the first and second embodiments according to the present invention;
- Figure 6:: volumetric view of a first embodiment of collection confinement (1) according to the present invention;
- Figure 7:: volumetric view of a second embodiment of collection confinement (1) according to the present invention;
- Figure 8:: side-cut view of a third embodiment of collection confinement (1) according to the present invention;
- Figure 9:: side-cut view of a fourth embodiment of collection confinement (1) according to the present invention;
- Figure 10:: side-cut view of a fifth embodiment of collection confinement (1) according to the present invention.

### Description of embodiments of the invention

The present invention discloses collection confinements (1) produced in composite substances adapted for production of collection objects, in particular of the type packages or parts thereof, and drinking recipients or parts thereof.

The collection confinements (1) can provide collection of a previously defined quantity of an edible substance associated with coffee or containing caffeine, such as for example a beverage or a substance precursor of a beverage.

The collection confinements (1) can advantageously provide protection of perishable edible substance along of a so-called shelve-life or period of useful life, i.e. suffering degradation of their physical-chemical properties, when exposed to ambient water vapour and oxygen.

Said perishable substances can be edible substances, in general, requiring a substantial protection of water vapour barrier, and can further be edible substances with aromatic profile, in particular furthermore requiring a protection of oxygen barrier.

Said aromatic edible substances can be precursor substances of aromatic beverages, such as for example roast and ground coffee beans, soluble coffee, tea, chocolate, lyophilized foods and other similar substances.

One example of the use of composite substances disclosed by the present invention is the case of packages of the type capsules, pods and similar, and with a semi-rigid, rigid or film-like dimensional form.

The composite substances disclosed by the present invention can be used in the mould injection of objects, in similar manner to the mould injection of composite substances including synthetic polymers and/or bio-polymers.

The present invention shall be hereinafter described based upon embodiments of confinements (1) associated with the use of a particular sub-product resulting from the processing of green coffee beans by roasting: the coffee silverscreen.

In this sense, there are described examples of completely or substantially biodegradable composite materials, reinforced with coffee silverscreen resulting from the roasting processing of coffee beans.

In particular, two mixtures of BioPBS with coffee silverscreen have been tested.

In the case of a first embodiment of the composite substance according to the present invention, a thermoplastic matrix including bio-polymer (BioPBS) with coffee silverscreen present in a mass fraction of 10,7% has been tested.

In the case of a second embodiment of the composite substance, a thermoplastic matrix has been tested that has a mass fraction 10,7% of fibre of coffee silverscreen, but that further includes the addition of a compatibilizing polymer to increase the interfacial adhesion between the PBS and the fibres of coffee silverscreen. The selected polymer was EVA-co-MA (Fusabond C 190) because contains the required functional group (maleic anhydride) grafted in the main structure of the EVA (ethylene vinyl acetate) and because presents a fusion temperature (71 °C) that is appropriate to the process. The EVA-co-MA has been added in a mass fraction of 14,9%. Experimentally, is has been established that the BioPBS and the EVA-co-MA were indeed mixable, which reinforced the justification for using this additive. The main disadvantage of this polymer is being of non-biodegradable petrochemical origin.

The mixtures of BioPBS with coffee silverscreen have been made at a 140 °C, so as to apply temperatures reasonably higher than the fusion temperature of the PBS (115 °C) and testing conditions that are closer to those used in the industry.

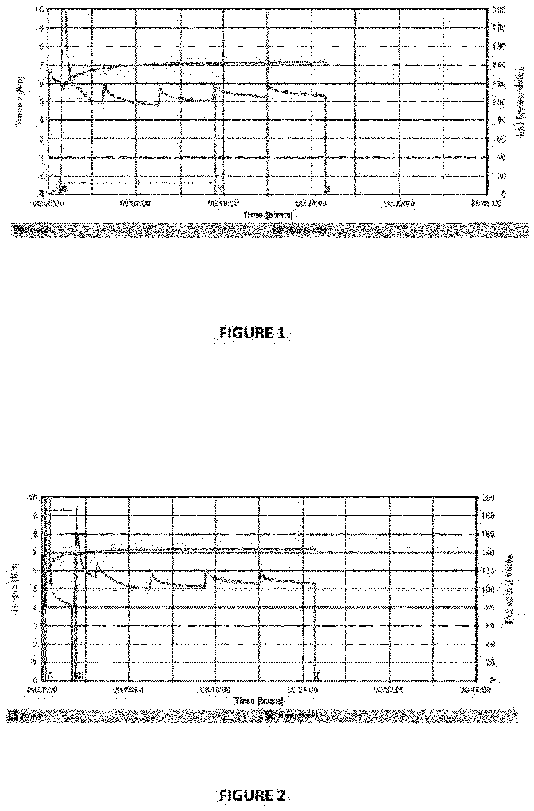

In both cases, the viscosity of the mixtures has kept stable for successive additions of constant fractions of coffee silverscreen, at a temperature of 140 °C. the viscosity of the first embodiment (see **Figure 1****)** is inferior to the viscosity of the second embodiment (see **Figure 2****),** for the same concentration of fibres of coffee silverscreen, because the EVA-co-MA additive has a relatively low fluidity index.

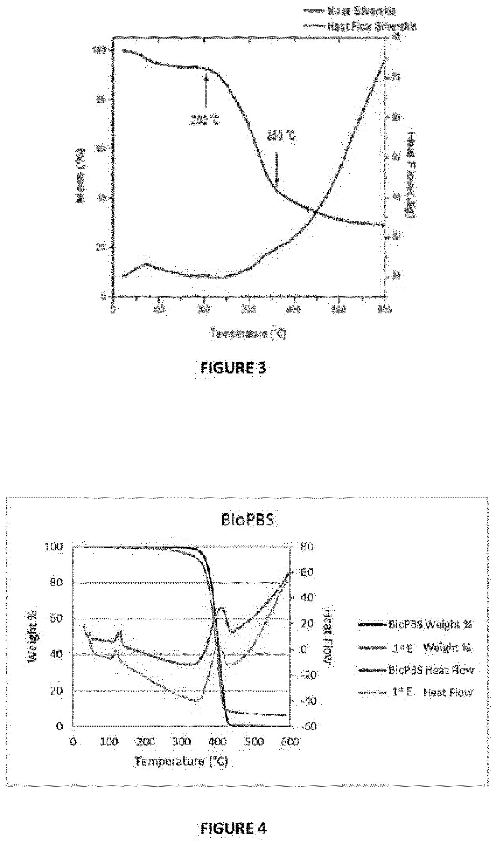

The thermal behaviour of the coffee silverscreen, resulting from the roasting process of coffee beans da, is represented in **Figure 3****.** The coffee silverscreen in this case contains 10% in weight of water and its thermal degradation occurs at about 200 - 400 °C. The residue at 600 °C corresponds to 30% in weight. The test has been carried out under inert atmosphere.

The results of the characterization of the thermal behaviour compare the BioPBS polymer with the first embodiment (see **Figure 4****).** The polymer alone, BioPBS, presents a degradation profile in a single step (340-440 °C) and the residue at 600 °C is negligible.

The first embodiment of composite including fibre of coffee silverscreen has the fusion peak at 122 °C. The results also show that a fraction of about 10% in mass of ECO 10 starts degrading at temperatures superior to 200 °C (220-360 °C), whereby the remaining 90% (m/m) are degraded up to 420 °C. At 600 °C, the sample consists in a carboniferous residue that corresponds to about 70 (m/m) of the initial sample. The mass low of 100 corresponds to the mass content in fibres.

This embodiment of composite substance can thus present a fluidity index of at least 1,5 g/ 10 min at 190°C, preferentially of at least 3,0 g/ 10 min at 190 °C.

Moreover, it has been shown as particularly advantageous the fact that these composite substances according to the present invention present a fusion temperature smaller than 200 °C, preferentially smaller than 170 °C, particularly preferentially smaller than 150 °C.

Moreover, in particular in what refers to the use of these substances for production of confinements, or other type of objects, by means of injection in mould or coating applications of other materials, the composite substances according to the present invention can present the following intervals of characteristic operational parameters:
- injection pressure between 30 and 150 bar, preferentially between 50 and 100 bar,
- compaction pressure between 5 and 30 bar, preferentially between 10 and 20 bar.

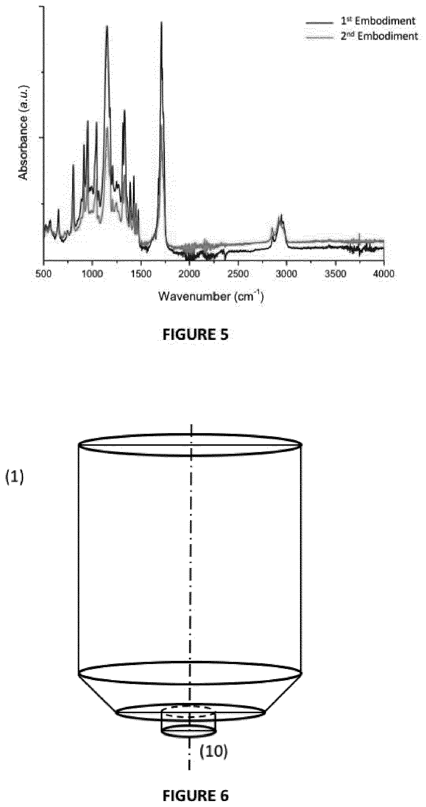

The spectrometry by means of FTIR ("Fourier-transform Infrared spectroscopy") of two composite material relating to the first and second embodiments is represented in **Figure 5****.** As can be observed, it is not possible to distinguish the contribution of the compatibilizing agent, in this case the EVA-co-MA, in the spectrum of the second embodiment (referred as "2nd Embodiment").

The macroscopic aspect of the composite materials, at the exit of the mixer, is very homogeneous. The resistance to manual fracture, tested in empirical manner, is high for the thickness and forces applied. The compatibilizing agent should increase the adhesion between the fibres and the matrix, increasing the mechanical resistance of the composite and decreasing the permeability of the material by fluids, that is, the barrier to the fluid transmission, including to gases (oxygen, water vapour).

The composite substance according to the present invention can include synthetic polymer and fibre of coffee silverscreen so that presents a water vapour transfer rate (WVTR) of less than 20 g/m².day, preferentially of less than 10 g/m².day, particularly preferentially of less than 5 g/m².day, at ambient conditions of 38 °C, 90% RH for film of 1 millimetre.

The composite substance according to present invention can include synthetic polymer and fibre of coffee silverscreen and present an oxygen transfer rate (OTR) of less than 500 cm³/m².day, preferentially of less than 250 cm³/m².day, particularly preferentially of less than 150 cm³/m².day, at ambient conditions of 38 °C, 90% RH for film of 1 millimetre, thereby providing barrier to water vapour and oxygen transfer. These properties are relevant for the production of recipients of collection of perishable substances that degrade as a result of exposure to ambient atmosphere.

The composite substance according to the present invention can include synthetic polymer and fibre of coffee silverscreen so that presents a negligible light transmission.

The thermoplastic matrix of the composite substances according to the present invention can, therefore, present physical characteristics, including properties of barrier to the transmission of ultraviolet radiation and to the transfer of fluids, in the same order of magnitude, at most with only one order of magnitude of difference, as the corresponding specific values of the polymers present in the composition thereof.

The scope of the present invention is naturally not limited by the examples above.

As shall be promptly understood by the reader, it is further possible to use fibres of other sub-products of processing of vegetal species, such as for example: locust bean husk, cinnamon husk and rice husk.

Moreover, these substances can be combined not only with polymers of vegetal origin, but also as polymers of synthetic and fossil origin.

The collection confinement (1) according to the present invention can be adapted so that can collect a previously defined volume of a solid medium, including non-granulated, granulated, such as for example roast and ground coffee beans, in powder, such as for example soluble coffee powder, of a pasty medium or of a liquid medium, such as for example coffee concentrate.

The collection confinement (1) can be adapted so that can be functionally operated in a device for preparing an edible product, including a beverage with caffeine content, such as an aromatic beverage, a soft drink or similar.

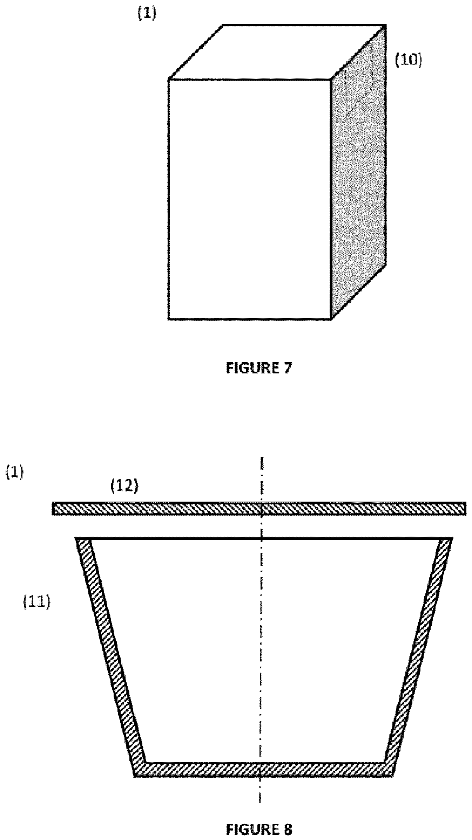

As represented in **Figures 6** and **7****,** the collection confinement (1) can present a part that configures at least most part of the envelope of a collection volume, including of circular or trapezoidal cross-section, and that can configure an opening portion (10) adapted so that can be closed and open by means of a removable element. In the case of another embodiment **(****Figure 7****),** the collection confinement (1) can be configured as the entirety of the envelope of a collection volume, whereby it is further adapted so that an opening portion (10) can be provided on a wall thereof, for example by means of a previously weakened material zone. Moreover, the collection confinement (1) can be adapted for collection of a weight smaller than 5 kg, preferentially smaller than 1 kg.

As represented in **Figure 8****,** the collection confinement (1) can present a first part (11) and a second part (12), for example a container part and a lid part, adapted so that can be retained to each other a thereby confine a collection space inside, whereby at least one, preferentially both of said first and second parts present completely biodegradable compositions, whereby the first (11) and second (12) parts can be provided in composite substances with similar or different fractions of natural fibres of coffee silverscreen, or other sub-product of processing of an aromatic vegetal species, such as for example rice, cinnamon and locust bean. Moreover, the collection confinement (1) can be adapted for collection of a weight of edible substance smaller than 20 g, preferentially smaller than 10 g.

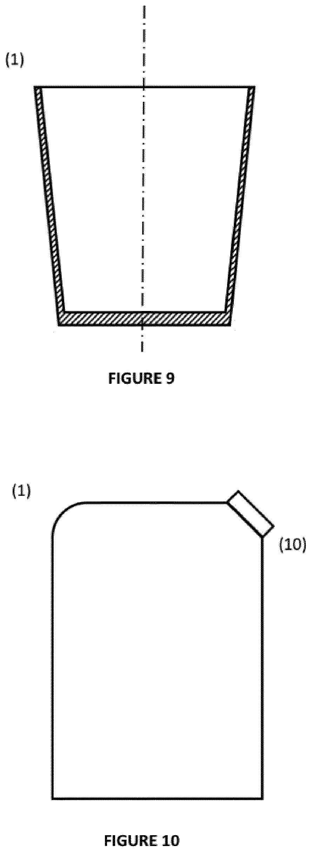

**Figures 9** and **10** represent the case of a collection confinement (1) according to the present invention, provided in the form of a drinking recipient, notably with a general shape of a glass, cup or similar type, or of bottle or similar type, respectively.

## Claims

1. Confinement for collection of edible substances,
**characterized**
**in that** the collection confinement (1) provides envelope with properties of barrier to liquids, to a collection volume for an edible substance associated with coffee or including caffeine, with a specific weight of less than 1.100 kg/m³, and
**in that** the collection confinement (1) is produced in a composite substance presenting a thermoplastic matrix that includes natural fibres from sub-products resulting from processing of at least one of: green coffee beans and a derivate thereof.

2. Confinement according to claim 1, **characterized**
**in that** the collection confinement (1) presents a rigid or semi-rigid envelope with barrier properties to at least one of transmission of ultraviolet radiation and transfer of oxygen, and is produced in at least most part, preferentially entirely, in a composite substance that includes:
- at least one of: polymers and bio-polymers;
- natural fibres from a sub-product of processing of green coffee beans, preferentially coffee silverscreen resulting from roasting of green coffee beans,
whereby it is preferred when the collection confinement (1) is produced in a substance that presents only substance of vegetal origin, including fibres, and associated with sub-products from processing of coffee beans.

3. Confinement according to claims 1 or 2, **characterized**
**in that** the collection confinement (1) is produced in a composite substance presenting a thermoplastic matrix that includes coffee silverscreen in at least part of mass fraction, preferentially at least most part of mass fraction, preferentially at least 600 of mass fraction of said composite substance, and
**in that** the collection confinement (1) is produced in a composite substance that at least includes coffee silverscreen and further at least one from the list of natural fibres associated with at least one of:
- processing of cinnamon, such as fibre of cinnamon husk;
- processing of locust bean, such as fibre of locust bean husk;
- processing of rice, such as fibre of rice husk;
whereby the composite substance presents values of parameters of barrier to ultraviolet radiation transmission and to fluid transfer that are preferentially in the same order of, at most only with one order of magnitude of difference, as the corresponding values that are specific of the polymers present in the composition thereof.

4. Confinement according to any of claims 1 to 3, **characterized in that** the collection confinement (1) is produced in a composite substance with a polymeric matrix that includes natural fibres of vegetal sub-products, and at least one of the following synthetic polymers:
- a polyethylene from the list that includes high density polyethylenes and low density polyethylenes (LDPE),
- poly-glycolide (PGA);
- polycaprolactone (PCL);
- poly u-valerolactone (PVL);
- thermoplastic amide (TPS);
- ethylene copolymer and vinyl alcohol (EVOH);
- polyvinylidene chloride (PVDC),
whereby it is preferred when the bio-polymeric matrix does not include poly-lactic acid (PLA).

5. Confinement according to any of claims 1 to 4, **characterized in that** the collection confinement (1) is produced in a composite substance with bio-polymeric substance that groups natural fibres of vegetal sub-products, preferentially at least including the fibre of coffee silverscreeen, and BioPBS (polybutylene succinate), whereby it is preferred when the bio-polymeric matrix does not include poly-lactic acid (PLA) PLA.

6. Confinement according to any of claims 1 to 5, **characterized in that** the collection confinement (1) provides at least one of:
- a flexible materially continuous envelope, including of the bag type, cartridge, handbag or similar;
- a semi-rigid or rigid materially continuous envelope, including of the type pod, capsule or similar,
and
**in that** at least part of the collection confinement (1) in direct contact with the edible substance inside thereof, is provided in a substance that includes at least coffee silverscreen or other substance of sub-product resulting from processing of green coffee beans or derivate thereof.

7. Confinement according to any of claims 1 to 6, **characterized in that** the collection confinement (1) is adapted so that can collect a previously defined volume of a solid medium, including non-granulated, granulated, in powder, of a pasty medium or of a liquid medium, and
**in that** the collection confinement (1) is adapted so that can be functionally operated in a device for preparing an edible product, including a beverage with a caffeine content, such as an aromatic beverage, a soft drink or similar.

8. Confinement according to any of claims 1 to 7, **characterized in that** the collection confinement (1) is produced in a composite substance with a mass ratio of fibre of coffee silverscreen of more than 10%, preferentially more than 20%, whereby it is preferred when, in the case of including synthetic polymers, the mass ratio of fibre of coffee silverscreen is comprised between 10% and 60%, preferentially between 10% and 40%, and in the case of including bio-polymers, the mass ratio of fibre of coffee silverscreen is comprised between 10% and 60%, preferentially between 20% and 40%.

9. Confinement according to any of claims 1 to 8, **characterized in that** the collection confinement (1) is produced in a composite substance that presents a mass ratio of bio-polymers of at least 40%, preferentially of at least 60%, whereby the mass ratio of bio-polymers can be comprised between 40 and 90%, preferentially between 50 and 80%, and
**in that** the collection confinement (1) is produced in a composite substance that includes a compatibilizing agent, whereby the compatibilizing agent is preferentially a synthetic polymer, for example polyethylene, grafted with maleic anhydride (PE-co-MA), or a bio-polymer, for example BioBPS, grafted with maleic anhydride.

10. Confinement according to any of claims 1 to 9, **characterized in that** the collection confinement (1) is produced in a composite substance that presents a mass ratio of compatibilizing agents of at most 30%, preferentially at most 20%, whereby the mass ratio of compatibilizing agents can be comprised between 5 and 30%, preferentially between 7 and 20%.

11. Confinement according to any of previous claims, **characterized**
**in that** the collection confinement (1) is produced in a composite substance that includes synthetic polymer and fibre of coffee silverscreen presents a water vapour transfer rate (WVTR) of less than 20 g/m².day, preferentially less than 10 g/m².day, particularly preferentially less than 5 g/m².day, at ambient conditions of 38 °C, 90% RH for film of 1 millimetre, and
**in that** the collection confinement (1) is produced in a composite substance that includes synthetic polymer and fibre of coffee silverscreen presents and oxygen transfer rate (OTR) of less than 500 cm³/m².day, preferentially less than 250 cm³/m².day, particularly preferentially less than 150 cm³/m².day, at ambient conditions of 38 °C, 90% RH for film of 1 millimetre, and
**in that** the collection confinement (1) is produced in a composite substance that includes synthetic polymer and fibre of coffee silverscreen presents a light transmission of less than 20%, preferentially of less than 10%.

12. Confinement according to any of previous claims, **characterized**
**in that** the collection confinement (1) is produced in a composite substance that presents at least one of:
- a density of less than 1,3 kg/m³, preferentially less than 1,1 kg/m³;
- a fluidity index of at least 1,5 g/ 10 min, at 190°C, preferentially of at least 3,0 g/ 10 min, at 190 °C,
- a fusion temperature of less than 200 °C, preferentially less than 170 °C, particularly preferentially less than 150 °C.

13. **Use** of a collection confinement, **characterized**
**in that** includes the utilization of a sub-product of processing of coffee beans, preferentially including at least of coffee silverscreen that results after drying and/or roasting of coffee beans, for the production of said collection confinement.

14. Use according to claim 13, **characterized in that** includes the use of the collection confinement for collecting and distributing edible substances including of a coffee derivate, or including caffeine or similar substance.

15. Use according to claims 13 or 14, **characterized in that** includes the use of the collection confinement for operation of apparatus for preparation of edible products, including of beverages, such as for example coffee based beverages or form a derivate thereof.
